Europäisches Patentamt

European Patent Office

Office européen des brevets

(19)

(11) Publication number: **0 114 082**
**B1**

(12) **EUROPEAN PATENT SPECIFICATION**

(45) Date of publication of patent specification: **08.06.88**

(51) Int. Cl.⁴: **G 11 B 7/08**

(21) Application number: **84200030.9**

(22) Date of filing: **11.01.84**

(54) **Apparatus for recording and/or reading information by means of a radiation beam.**

(30) Priority: **14.01.83 NL 8300133**

(43) Date of publication of application:
**25.07.84 Bulletin 84/30**

(45) Publication of the grant of the patent:
**08.06.88 Bulletin 88/23**

(84) Designated Contracting States:
**CH DE FR GB IT LI**

(56) References cited:
**EP-A-0 011 149**
**EP-A-0 112 595**
**FR-A-2 472 298**
**FR-A-2 505 074**
**GB-A-1 462 791**
**US-A-3 829 622**

**PATENTS ABSTRACTS OF JAPAN, vol. 6, no.
206(P-149)(1084), 19th October 1982 & JP-A-
57113427**

**PATENTS ABSTRACTS OF JAPAN; vol. 6, no.
82(P-116)(960), 20th May 1982 & JP-A-5718035**

(73) Proprietor: **N.V. Philips' Gloeilampenfabrieken
Groenewoudseweg 1
NL-5621 BA Eindhoven (NL)**

(72) Inventor: **Jansen, Gerardus Lucien Mathildus
c/o INT. OCTROOIBUREAU B.V. Prof. Holstlaan 6
NL-5656 AA Eindhoven (NL)**
Inventor: **Vorspaget, Alexander
c/o INT. OCTROOIBUREAU B.V. Prof. Holstlaan 6
NL-5656 AA Eindhoven (NL)**

(74) Representative: **Van Weele, Paul Johannes Frits
et al
INTERNATIONAAL OCTROOIBUREAU B.V. Prof.
Holstlaan 6
NL-5656 AA Eindhoven (NL)**

## Description

The invention relates to an apparatus for recording and/or reading information on a disc by means of a radiation beam, which disc is rotatable about an axis of rotation, which apparatus comprises a stationary frame, having two upright walls provided with locating surfaces, a drive means for the rotary drive of the disc, which drive means comprises a drive spindle which is rotatable about the axis of rotation and a stationary spindle support system provided with bearing means for the drive spindle, a slide which is movable in a radial direction relative to the axis of rotation and comprises means for directing a radiation beam emitted by a radiation source to said disc, a parallel-guide arrangement for the slide, which arrangement comprises two parallel guiding rods which are detachably secured transversely to said upright walls at a distance from each other on the locating surfaces of said upright walls, and which are provided with guide surfaces, and an opto-electronic system comprising said radiation source, one or more optical elements and means for effecting a conversion between optical and electrical modulation of the information. An apparatus of this type is described in the applicant's prior but not-prepublished European Patent Application 0112595. The parallel guiding rods in this apparatus have circular cross-sections.

The opto-electronic system may or may not be arranged stationarily. Apparatus are known in which the opto-electronic system is combined with the objective to form an integrated unit, see for example US Patent 4,135,083. This unit may be referred to as an integrated optical pick-up, which pick-up is bodily movable for following the information tracks on the disc. Adding all the optical and electronic components in order to obtain an integrated pick-up has the result that the system which is movable relative to the disc has a larger mass than if the objective alone is movable and the opto-electronic system is arranged stationarily elsewhere on the slide or at another location. In the latter case the distance between the opto-electronic system and the objective is variable and it is difficult to ensure that said system cooperates correctly with the movable objective. For this purpose it is necessary that the components of the opto-electronic system are positioned and aligned in an accurate manner relative to the path of movement of the slide. The spindle support of the drive means should also be positioned accurately relative to the path of movement of the slide.

In the above apparatus the spindle support and the opto-electronic system stationarily arranged, are aligned and positioned accurately by means of a base plate on which accurately machined locating surfaces are formed at a number of levels, to which surfaces the various parts of the apparatus are secured. A very high accuracy is required because various manufacturing tolerances accumulate in the overall dimensional tolerance of the complete apparatus. Moreover, the accuracy attainable greatly depends on the temperature of the base plate and the parts secured to this plate.

It is the object of the invention to provide an apparatus for recording and or reading information on a disc by means of a radiation beam, which disc is rotatable about an axis of rotation, in which apparatus the spindle support and/or the opto-electronic system if stationary arranged, can be positioned accurately relative to the path of movement of the slide in a simple and cheap manner and in which the effect of temperature variations on the positioning accuracy is minimal. To this end the apparatus according to the invention comprises a stationary frame, having two upright walls provided with locating surfaces, a drive means for the rotary drive of the disc, which drive means comprises a drive spindle which is rotatable about the axis of rotation and a stationary spindle support system provided with bearing means for the drive spindle, a slide which is movable in a radial direction relative to the axis of rotation and comprises means for directing a radiation beam emitted by a radiation source to said disc, a parallel-guide arrangement for the slide, which arrangement comprises two parallel guiding rods which are detachably secured transversely to said upright walls at a distance from each other on the locating surfaces of said upright walls, and which are provided with guide surfaces, and an opto-electronic system comprising said radiation source, one or more optical elements and means for effecting a conversion between optical and electrical modulation of the information, the spindle support system and/or the opto-electronic system the latter if stationarily arranged being supported by end parts of said two parallel guiding rods, and being provided with locating surfaces which cooperate with the end parts of said rods for an accurate positioning.

In the apparatus in accordance with the invention the guiding rods for guiding the slide are also employed for supporting the spindle support and/or the opto-electronic system if this system is stationarily arranged, so that no specially machined mounting surfaces have to be provided for these parts on a base plate. As temperature variations mainly give rise to variations in the longitudinal dimensions of the guiding rods, which variations do not effect the correct operation of the apparatus, the operation of the apparatus is highly dependent of temperature effects.

In an embodiment of the apparatus according to the invention the two parallel guiding rods have circular cross-sections. This is advantageous because such rods are among the cheapest precision parts available.

It is to be noted that in JP—A—57—113427 a construction of a drive unit for an optical disk player is described which comprises an optical system block supported movably by an U-shaped base block on which the motor for rotating the disk is also arranged. This rather cumbersome construction, however, does not use rods and has hardly any resemblance with the inventive apparatus.

An embodiment of the invention will now be described in more detail, by way of example with reference to the drawings, in which:

Fig. 1 is a plan view of an apparatus in accordance with the invention, in which the parallel guides carry both a spindle support and a stationarily arranged opto-electronic system.

Fig. 2 is a sectional view taken on the lines II—II in Fig. 1 and

Fig. 3 is a right-hand end view of the apparatus of Fig. 1.

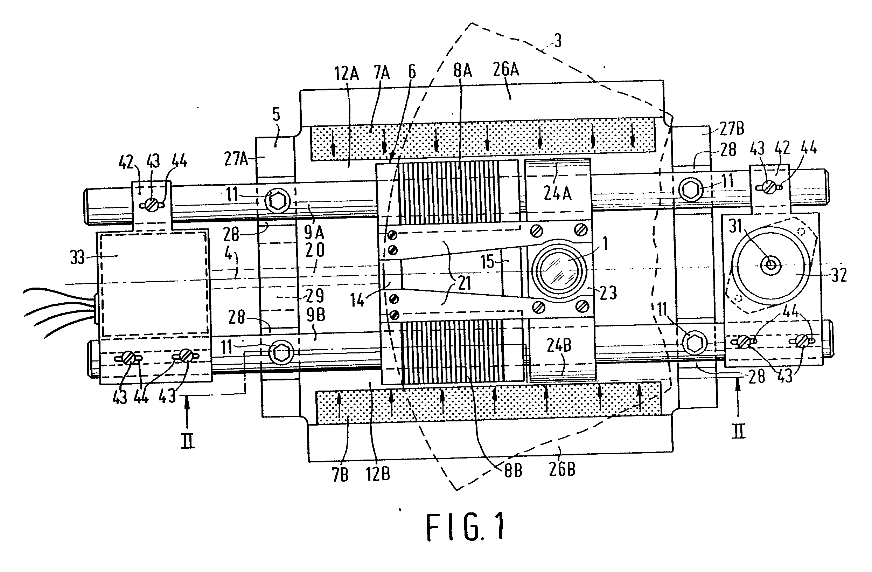

The apparatus shown serves for translating an objective 1 along a radial path 4 relative to a disc 3 which rotates about an axis of rotation 2. The apparatus comprises a frame 5 and a slide 6 which carries the objective 1 and which can be translated relative to said frame along the radial path 4. The frame carries two permanent stator magnets 7A and 7B, which extend parallel to the path 4 and which are magnetized transversely of said path, the direction of magnetisation being indicated by arrows in Fig. 1. Two translatable drive coils 8A and 8B of an electronically conductive material are movable in the magnetic field of these stator magnets.

A parallel-guide arrangement for the slide 6 comprises two parallel guiding rods 9A and 9B and four sliding bearing bushes 10 made of tetrafluoroethylene. The rods are secured to the frame 5 by screws 11 and form part of a stator yoke having air gaps 12A and 12B respectively. The drive coils 8A and 8B are arranged concentrically around the rods 9A and 9B.

The drive coils 8A and 8B are carried on cylindrical coil formers 13A and 13B. The coil formers are provided internally with said bearing bushes at both ends. The coil formers form a structural part of the slide. In addition to the coil formers the slide comprises two end plates 14 and 15. These plates serve to interconnect the two coils 8A and 8B and are preferably made of a non-magnetizable light-weight but strong material, such as a plastics or aluminium.

The objective 1 is movable along its optical axis 18 relative to the slide 6 under servo control to enable the movements of the disc 3 to be followed by the read spot 19 formed by a radiation beam 20 emitted by a radiation source. The objective is supported on the slide 6 by two blade springs 21 at the upper side of the slide and two blade springs 22 at the lower side. The objective is mounted on a bracket 23 which is movable along the optical axis 18 over a limited distance and which carries actuator coils 24A and 24B on its ends. These coils serve for the electro-dynamic drive of the objective along the optical axis. The upper parts of the actuator coils 24A and 24B are movable in air gaps 12A and 12B respectively between the rods 9A and 9B and the stator magnets 7A and 7B, so that the actuator coils cooperate with the field of the stator magnets to exert forces on the objective along its optical axis.

Thus, the stator magnets are used both for driving the slide along the axis 4 and for driving the objective along the axis 18.

The frame 5 is made of a magnetizable material, for example iron, and forms part of the stator yoke which carries the permanent magnets 7A and 7B and of which the rods 9A and 9B also form part, as already stated.

The apparatus is constructed symmetrically relative to a plane containing the axes 4 and 18. The rods 9A and 9B are identical, as also are the drive coils 8A and 8B, the actuator coils 24A and 24B and the stator magnets 7A and 7B.

The frame 5 is shaped substantially as an open box having a bottom 25 and upright walls 26A, 26B, 27A and 27B. These walls do not join one another at the corners of the frame. The complete frame is formed from a single blank sheet of iron, the walls being formed by portions which are bent up from the bottom 25. The stator magnets 7A and 7B are secured to the inner sides of the walls 26A and 26B, for example by a suitable adhesive. The lines of magnetic force of the magnets extend from the magnets 7A and 7B through the air gaps 12A and 12B to the rods 9A and 9B, which are each supported by portions of the walls 27A and 27B. Thus, the rods are in contact with the sheet iron frame 5, so that the magnetic circuit is closed through the frame.

In order to ensure that the rods 9A and 9B extend perfectly parallel to one another and at the same level, recesses 28 with V-section bottoms are formed in the walls 27A and 27B to receive the rods. These recesses can be formed by a simple machining operation with the required accuracy. No stringent requirements are imposed on the accuracy of the other parts of the frame 5. The accuracy of the guide arrangement for the slide 6 depends on the accuracy of the form and dimensions of the rods 9A and 9B and the accuracy with which they extend parallel to each other and are supported at the same level by the frame.

In the wall 27A an aperture 29 is formed which serves *inter alia* for the passage of the radiation beam 20. At its underside the objective 1 carries a reflecting element which reflects the radiation beam through an angle of 90°. The aperture 29 may also serve for the passage of electrical connecting wires to the coils 8A and 8B on the slide and the actuator coils 24A and 24B. These connecting wires and other electrical connections to the slide are omitted from the drawings for the sake of simplicity and are irrelevant to the present invention. The means which are generally required for detecting the position of the objective 1 in the path 4 are not shown and are also irrelevant to the present invention.

For the rotary drive of the disc 3 the apparatus comprises a drive means in the form of an electric motor 30 which incorporates a drive spindle 31 for the disc 3, which spindle is rotatable about the axis of rotation 2 and is journalled in bearing means in the motor housing, so that the motor housing serves as part of a stationary spindle support system. Instead of being driven directly by an electric motor the disc 3 may be driven indirectly through a pulley mounted on the drive spindle and driven *via* a belt by an electric motor which is arranged at a different location from the drive spindle. In that case a separate spindle support must be provided. A turntable 32 for supporting the disc 3 is mounted on the spindle 31.

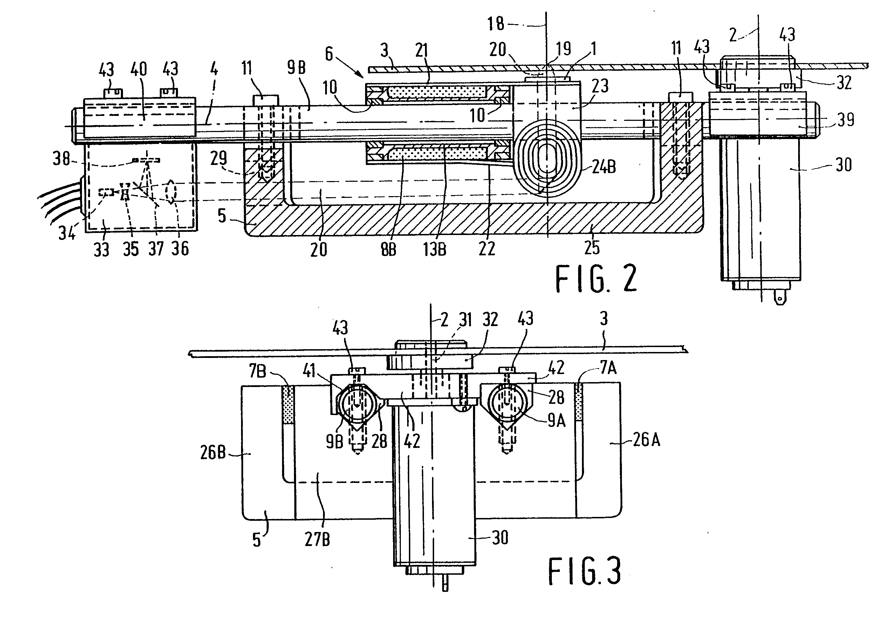

The light beam 20 issues from a stationarily arranged opto-electronic system 33. This unit is schematically shown in Figs. 1 and 2 and may be constructed in various ways. It may comprise a light source 34, for example, a semi-conductor diode, a diverging lens 35, a converging lens 36, a semi-transparent mirror 37 and a system of light-sensitive semi-conductor diodes 38 for converting the light-beam modulation into an electrical modulation. The apparatus shown is suitable only for reading optical discs, not for recording information. In apparatus suitable for recording information the emerging light beam would be modulated with information. This may, for example, be achieved by modulating the intensity of the light beam emitted by the laser with the information. For the construction and operation of opto-electronic systems suitable for converting optical into electrical modulation and *vice versa,* reference is made to the comprehensive literature available on this subject. So far as the invention is concerned the only consideration is whether the opto-electronic system is stationarily arranged relative to the slide 6 or is movable with the slide. In the embodiment shown it is arranged stationarily and is mounted independently of the movable slide 6. The information to be recorded or read is transferred between the slide 6 and the stationary system 33 without contact *via* the light beam 20. It is essential that the position of the stationarily arranged opto-electronic system is defined accurately relative to the slide 6 in any position of the slide 6 along its path 4.

Both the spindle support system and the opto-electronic system 33 are supported by the two parallel rods 9A and 9B. For this purpose the motor 30 is arranged on a support 39 and the system 33 is arranged on a support 40. The support 39 forms part of the support for the drive spindle 31 and the support 40 forms part of the system 33. Each of the two supports 39 and 40 bridges the two guide rods 9A and 9B and is formed with a V-section groove 41 adjacent one end and a flat projection 42 at the other end. The walls of the V-section grooves and the undersides of the flat projections constitute locating surfaces which cooperate with the guide rods 9A and 9B for positioning the supports 39 and 40 accurately relative to the rods. Small deviations from the desired positions in the longitudinal direction of the rods have hardly any effect or no effect at all on the correct operation of the apparatus. Consequently, a very accurate adjustment in the longitudinal direction of the guide rods 9A and 9B is not necessary. Temperature variations hardly effect the correct operation of the apparatus, because the position of the slide and the two supports 39 and 40 relative to each other mainly varies in the longitudinal direction of the guiding rods 9A and 9B. The supports 39 and 40 are secured to the rods 9A and 9B by means of screws 43, which pass through slots 44 in the supports 39 and 40.

Alternatives to the embodiment of the invention shown in the drawings are possible. For example, it is not necessary that the guiding rods have circular cross-sections. Guiding rods having a different cross-section may also be used in principle. Moreover, it is not necessary to make the frame 5 of a ferro-magnetic material and to employ it as a part of the stator yoke. It is not necessary to secure the spindle support system as well as the opto-electronic system to the guiding rods. Some of the advantages of the invention are already obtained if only one of these parts is arranged on the guiding rods. Alternatively, the locating surfaces of the supports may be formed by the ends of set-screws by means of which the desired positional accuracy can be adjusted.

## Claims

1. Apparatus for recording and/or reading information on a disc by means of a radiation beam, which disc is rotatable about an axis of rotation (2), which apparatus comprises — a stationary frame (5), having two upright walls (27A, 27B) provided with locating surfaces (28); a drive means (30) for the rotary drive of the disc, which drive means comprises a drive spindle (31) which is rotatable about the axis or rotation and a stationary spindle support system provided with bearing means for the drive spindle; a slide (6) which is movable in a radial direction relative to the axis of rotation and comprises means for directing a radiation beam emitted by a radiation source to said disc; a parallel-guide arrangement for the slide, which arrangement comprises two parallel guiding rods (9) which are detachably secured transversely to said upright walls at a distance from each other on the locating surface of said upright walls, and which are provided with guide surfaces, and an opto-electronic system (33) comprising said radiation source, one or more optical elements and means for effecting a conversion between optical and electrical modulation of the information, the spindle support system and/or the opto-electronic system the latter if stationarily arranged being supported by end parts of said two parallel guiding rods, and being provided with locating surfaces (41) which cooperate with the end parts of said rods for an accurate positioning.

2. Apparatus according to claim 1, wherein the said rods have circular cross-sections and said locating surfaces (28, 41) are V-shaped groves.

## Patentansprüche

1. Gerät zum Aufzeichnen und/oder Wiedergeben von Informationen auf einer Platte mittels eines Strahlungsbündels, wobei die Platte um eine Drehungsachse (2) drehbar ist und das Gerät die folgenden Teile aufweist: einen ortsfesten Rahmen (5) mit zwei Stehwänden (27A, 27B) mit Ausrichtflächen (28); Antriebsmittel (30) zum drehenden Antreiben der Platte, wobei diese Antriebsmittel eine Antriebsspindel (31) aufweisen, die um die Drehungaschse drehbar ist und wobei ein ortsfestes Spindelträgersystem vorgesehen ist, das mit Lagermitteln für die Antriebsspindel versehen ist; einen Schlitten (6), der gegenüber der Drehungsachse in einer radialen Richtung beweglich ist und Mittel aufweist zum Richten eines von einer Strahlungsquelle ausgestrahlten Strahlungsbündels auf die genannte Platte; eine Parallelführungsvorrichtung für den Schlitten, die zwei parallele Führungsstangen (9) aufweist, die in einem Abstand voneinander quer zu genannten Stehwänden an den Ausrichtflächen der genannten Stehwände entfernbar angeordnet und mit Führungsflächen versehen sind und; ein optoelektronisches System (33), das die genannte Strahlungsquelle, ein oder mehrere optische Elemente und Mittel aufweist zum Durchführen einer Umsetzung zwischen optischer und elektrischer Modulation der Information; wobei das Spindelträgersystem und/oder das optoelektronische System, das letztere falls ortsfest angeordnet, durch Endteile der genannten zwei parallelen Führungsstangen unterstützt und mit Ausrichtflächen (41) versehen sind, bzw. ist die zur einwandfreien Positionierung mit den Endteilen der genannten Stangen zusammenarbeiten.

2. Gerät nach Anspruch 1, dadurch gekennzeichnet, dass die genannten Stangen kreisrund und die genannten Ausrichtflächen (28, 41) V-förmige Rillen sind.

**Revendications**

1. Appareil pour enregistrer et/ou lire au moyen d'un faisceau de rayonnement de l'information sur un disque pouvant tourner autour d'un axe de rotation (2), appareil comportant: un châssis stationnaire (5) ayant deux parois verticales présentant des surfaces de montage (28); des moyens d'entrainement (30) servant à imprimer un mouvement de rotation au disque et comportant un arbre d'entrainement (31) pouvant tourner autour de l'axe de rotation et un système stationnaire de support pour l'arbre, muni de moyens d'appui pour l'arbre d'entrainement; un chariot (6) pouvant être déplacé dans un sens radial par rapport à l'axe de rotation et comportant des moyens pour diriger vers ledit disque un faisceau de rayonnement émis par une source de rayonnement; un ensemble de guides paralléles pour le chariot, ensemble qui comporte deux tiges de guidage paralléles (9) fixées de façon détachable et à distance l'une de l'autre sur les surfaces de montage desdites parois verticales de maniére à s'étendre perpendiculairement auxdites parois verticales, tiges de guidage qui présentent des surfaces de guidage et; un système opto-électronique (33) comportant ladite source de rayonnement, un ou plusieurs éléments optiques ainsi que des moyens pour effectuer une conversion entre des modulations optique et électrique de l'information, caractérisé en ce que le systéme de support pour l'arbre et/ou le système électro-optique, si ce dernier est disposé de façon stationnaire, sont supportés par des parties terminales desdites deux tiges de guidage paralléles et présentent des surface de centrage (41) coopérant avec les parties terminales desdites tiges pour un positionnement de précision.

2. Appareil selon la revendication 1, caractérisé en ce que lesdites tiges ont une section transversale circulaire et en ce que lesdites surfaces de centrage (28, 41) sont des gorges en V.

0 114 082

FIG.1

FIG. 2

FIG. 3

0 114 082